# EUROPEAN PATENT SPECIFICATION

(11) **EP 0 445 839 B1**
(45) Date of publication and mention of the grant of the patent: **13.09.1995**
(21) Application number: 91103612.7
(22) Date of filing: 08.03.1991
(51) Int. Cl.: C08F 214/22

(54) **Fluoroelastomers based on vinylidene fluoride, hexafluoropropene and tetrafluoroethylene**
Fluorelastomere auf Basis von Vinylidenfluorid, Hexafluorpropen und Tetrafluorethylen
Elastomères fluorés à base de fluorure de vinylidène, hexafluoropropène et tétrafluoroéthylène

(30) Priority: 09.03.1990 IT 4100390
(43) Date of publication of application: 11.09.1991
(73) Proprietor: AUSIMONT S.p.A., I-20121 Milano (IT)
(72) Inventor: Brinati, Giulio, I-20123 Milano (IT); Albano, Margherita, I-20124 Milano (IT); Arcella, Vincenzo, I-28100 Novara (IT)
(74) Representative: Barz, Peter, Dr.

(56) References cited:
- FR-A- 2 393 012
- US-A- 2 968 649

## Description

The present invention relates to new fluoroelastomers, i.e., terpolymers of vinylidene fluoride, hexafluoropropene and tetrafluoroethylene.

US-A-4,123,603 discloses elastomeric terpolymers having the following monomeric composition:

| | |
|---|---|
| vinylidene fluoride: | 57 to 61% by weight |
| hexafluoropropene: | 27 to 31% by weight |
| tetrafluoroethylene: | 10 to 14% by weight. |

These terpolymers are endowed with a low glass transition temperature (Tg) and a low compression set at low temperature.

The preferred product according to the above patent has the following monomeric composition by weight: 59% of vinylidene fluoride, 29% of hexafluoropropene and 12% of tetrafluoroethylene. The average Tg of four samples of this product is 24.75°C. The compression set of the above samples, after a 70-hour compression test at 0°C (according to ASTM-D 395, method B) is lower than or equal to 20%, when measured at room temperature within one hour after completion of the test.

The above patent states and proves by means of several comparison examples that within the compositional range disclosed therein it is not possible to obtain, at the same time, a low Tg and a low compression set at low temperature.

US-A-2,968,649 discloses an elastomeric terpolymer consisting of 3 to 35% by weight of tetrafluoroethylene units and 97 to 65% by weight of vinylidene fluoride and hexafluoropropene units, said vinylidene fluoride and hexafluoropropene units being present in a weight ratio within the range of 2.33:1.0 to 0.667:1.0.

It has now surprisingly been found that there is another compositional range of terpolymers with which said two properties can be obtained simultaneously.

Thus, it is an object of the present invention to provide new fluoroelastomers based on vinylidene fluoride, hexafluoropropene and tetrafluoroethylene which are simultaneously endowed with both a low Tg and a low compression set at low temperature.

Another object is to provide fluoroelastomers of the above type which exhibit also a very low crystallinity, lower than that of the above known product, and low TR (temperature retraction) values.

A further object is to provide fluoroelastomers of the above type which furthermore exhibit a higher vulcanization rate than that of the above known product.

These and still other objects are achieved by the fluoroelastomers according to the present invention which are characterized by the following monomeric composition:

| | |
|---|---|
| vinylidene fluoride: | 60.5 to 64% by weight |
| hexafluoropropene: | 30 to 33% by weight |
| tetrafluoroethylene: | 5 to 8% by weight. |

These fluoroelastomers are endowed with a glass transition temperature (Tg) which is lower than or equal to about -25°C and show a compression set, after a 70-hour compression test at 0°C on a disc (according to ASTM D 395, method B), lower than or equal to about 18%, when measured at 23°C after 30 minutes.

Furthermore, they are endowed with a low crystallinity and low TR values. In addition they exhibit, as compared to the above known terpolymer, a higher vulcanization rate, which results in a higher productivity of the corresponding apparatus for the production of shaped articles.

They are particularly suitable for those applications in which a low Tg and a low compression set at low temperature are required, in particular for the manufacture of O-rings and shaft seals.

In these applications a lowering of the Tg and, even more important, of the TR values without adversely affecting the compression set values is a need particularly felt by the users, for which a gain of a few degrees centigrade represents substantial technological progress.

The terpolymers according to the present invention may be prepared by means of known methods such as, for example, those described in Kirk Othmer, Encyclopaedia of Chemical Technology, vol. 8, pages 500 ff., 1979. Examples of suitable polymerization methods are, in particular, bulk polymerization, polymerization in a solution of organic solvents and polymerization in a water emulsion or suspension. Examples of suitable radical polymerization initiators are inorganic peroxides such as ammonium or potassium persulphates, redox systems such as persulphate-bisulphite and organic peroxides such as, for example, benzoyl peroxide and dicumyl peroxide.

As chain transfer agents it is possible to use, for example, ethyl acetate and/or diethyl malonate.

Preferably it is operated in an aqueous emulsion, at temperatures ranging from about 25 to about 150°C and under a pressure ranging from 8 to 80 x 10⁵ Pa (8 to 80 atmospheres).

Another object of the present invention is represented by the articles manufactured from the terpolymers according to the present invention.

The following examples are given for merely illustrative purposes and are not to be construed as being a limitation of the scope of the present invention.

Examples 1 and 2 are within the compositional range of the present invention, while example 3 relates to the preferred composition of the above US-A-4,123,603.

The preparation of the polymers by means of the emulsion polymerization process was carried out in a manner such as to achieve, for all elastomers of the present examples 1 to 3, the same average molecular weight (deduced from the Mooney viscosity ML (1+10) at 121°C and the intrinsic viscosity) and the same molecular weight distribution.

Therefore, the chemico-physical properties indicated in Table 1 depend exclusively on the monomeric composition of the polymers.

### EXAMPLE 1

Employed was a 10-liter reactor equipped with stirrer. After vacuum had been applied 6,500 g of water were fed and pressure was generated in the reactor by means of a monomeric mixture having the following molar composition:

| | |
|---|---|
| vinylidene fluoride: | 58% |
| hexafluoropropene: | 38% |
| tetrafluoroethylene: | 4% |

The reactor was heated up to 85°C, reaching a pressure of 19 bar. Then there were added 260 ml of ethyl acetate as an aqueous solution at 66 ml/l and 13 g of ammonium persulphate as an aqueous solution at 150 g/l.

During polymerization, the pressure was maintained constant by feeding the monomers in the following molar ratio:

| | |
|---|---|
| vinylidene fluoride: | 78.5% |
| hexafluoropropene: | 16.5% |
| tetrafluoroethylene: | 5% |

After obtainment of 2,800 g of polymer with a polymerization time of 55 minutes, the whole system was cooled to room temperature. The emulsion was discharged and then coagulated by addition of an aqueous aluminium sulphate solution. The polymer was separated, washed with water and dried in an air-circulation oven at 60°C until its water content was below 0.2% by weight.

According to ¹⁹F-NMR analysis, the polymer exhibited the following monomeric composition:

| | |
|---|---|
| vinylidene fluoride: | 63% by weight |
| hexafluoropropene: | 30.6% by weight |
| tetrafluoroethylene: | 6.4% by weight |

The polymer was subjected to several determinations and tests, which are reported in Table 1.

A vulcanization blend was prepared by using a master batch M1 containing 50% of bisphenol AF and 50% of the fluoroelastomer and a master batch M2 containing 30% of an accelerator and 70% of the fluoroelastomer. The accelerator had the formula: 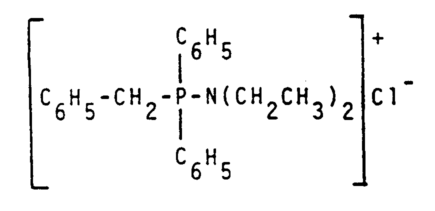
The blend contained:

| | |
|---|---|
| terpolymer | 100 parts by weight |
| M1 | 4 parts by weight |
| M2 | 1.5 parts by weight |
| Ca(OH)₂ | 6 parts by weight |
| MgO | 3 parts by weight |
| MT black | 25 parts by weight |

### EXAMPLE 2

The procedure of example 1 was followed, except that the reactor was pressurized with the following monomeric mixture:

| | |
|---|---|
| vinylidene fluoride: | 59% by mols |
| hexafluoropropene: | 36% by mols |
| tetrafluoroethylene: | 5% by mols |

During polymerization, the pressure was maintained constant by feeding the monomers in the following molar ratio:

| | |
|---|---|
| vinylidene fluoride: | 77.2% |
| hexafluoropropene: | 16.5% |
| tetrafluoroethylene: | 6.3% |

There were obtained 2,800 g of a terpolymer which, according to ¹⁹F-NMR analysis, exhibited the following monomeric weight composition:

| | |
|---|---|
| vinylidene fluoride: | 61.4% |
| hexafluoropropene: | 30.8% |
| tetrafluoroethylene: | 7.8% |

The terpolymer was subjected to the same determinations and tests as that of example 1. The results are reported in Table 1.

### EXAMPLE 3

For comparison purposes, the preferred terpolymer of US-A-4,123,603 was prepared. The modalities were identical with those of example 1, with the exception that:
(a) the reactor was pressurized with a monomer mixture of the following molar composition:

| | |
|---|---|
| vinylidene fluoride: | 56% |
| hexafluoropropene: | 36% |
| tetrafluoroethylene: | 8% |

(b) during polymerization, the pressure was maintained constant by feeding the monomers in the following molar ratio:

| | |
|---|---|
| vinylidene fluoride: | 74.7% |
| hexafluoropropene: | 15.6% |
| tetrafluoroethylene: | 9.7% |

There were obtained 2,800 g of terpolymer which, according to ¹⁹F-NMR analysis, exhibited the following monomeric weight composition:

| | |
|---|---|
| vinylidene fluoride: | 59.5% |
| hexafluoropropene: | 28.6% |
| tetrafluoroethylene: | 11.9% |

The results obtained with the above terpolymers and the products made therefrom are summarized in the following Table 1.

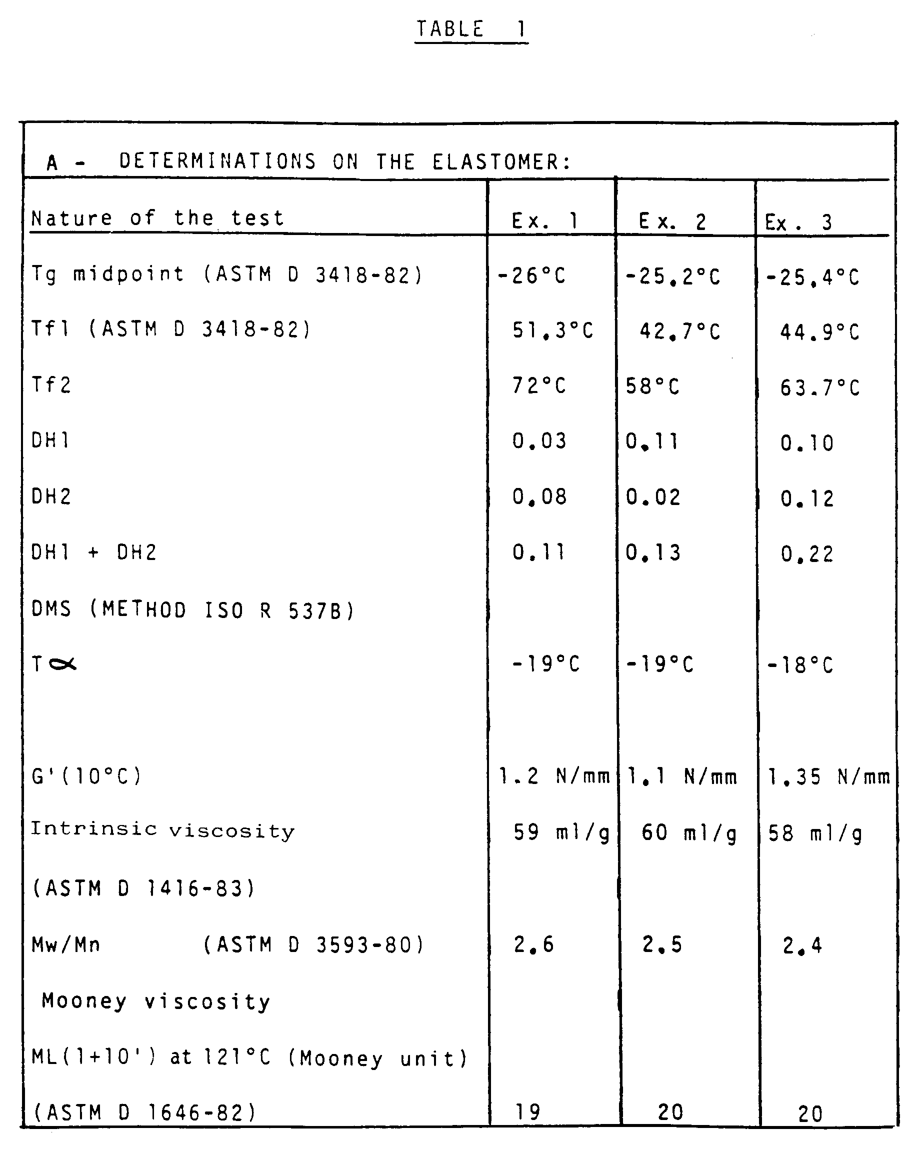

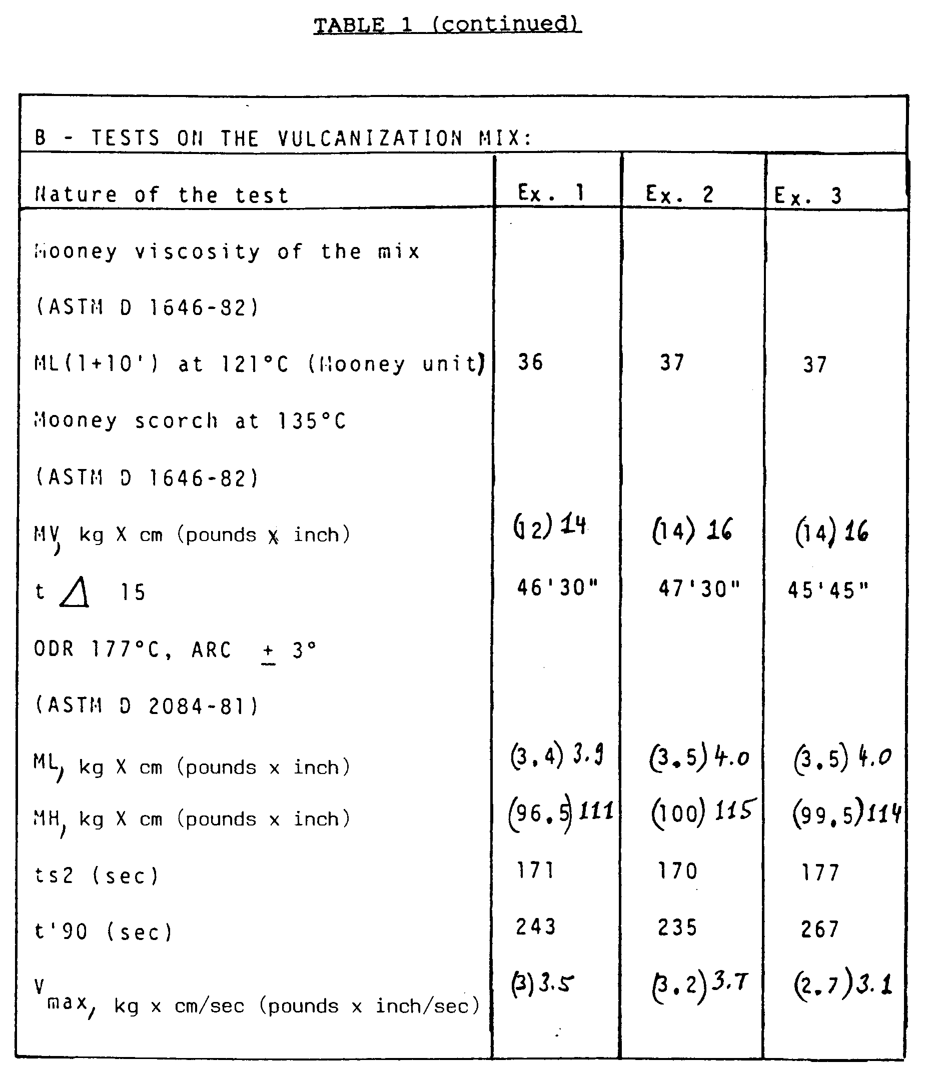

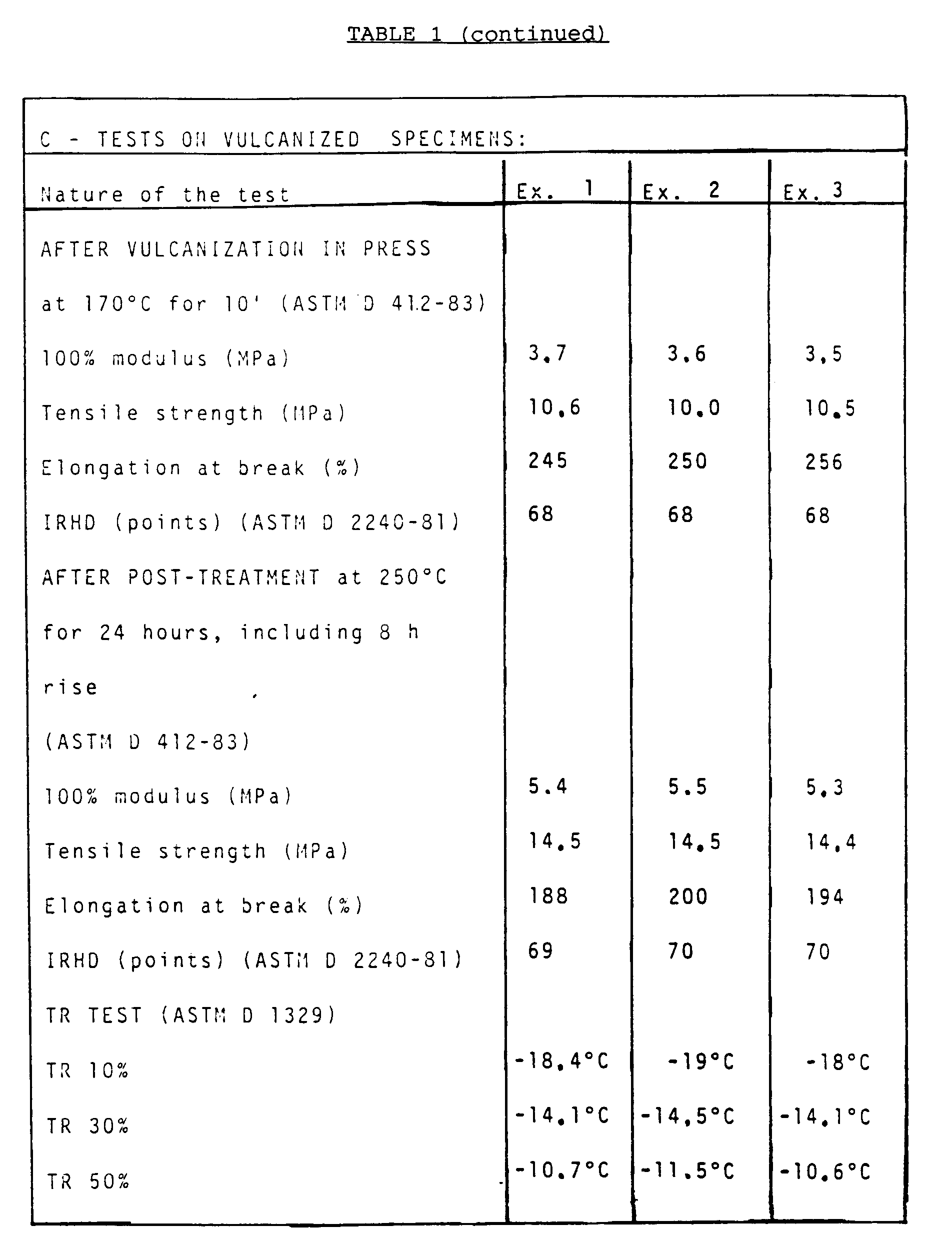

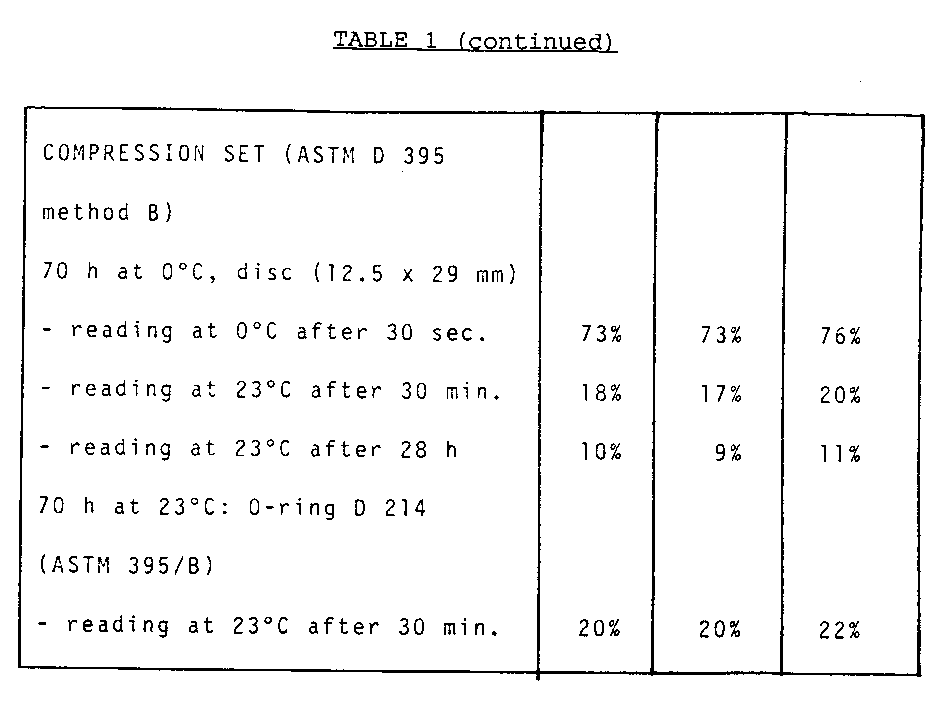

From a comparison of results obtained with the terpolymers according to the present invention (examples 1 and 2) and with that of the art (example 3) the following can be derived:
1. the Tg and TR values of the products according to the present invention are as low as, and often lower than those of the known product;
2. the data relating to DH1+DH2 and DMS show that the products according to the present invention exhibit a lower crystallinity;
3. the compression set after compression tests at 0°C and 23°C is lower for the products of the present invention;
4. in spite of a lower tendency to scorch (see the Mooney Scorch data at 135°C; tΔ15), the vulcanization rate of the terpolymers according to the present invention is higher (see ODR data at 177°C:Vₘₐₓ).

### EXAMPLES 4 to 6

It was operated as in example 1, except that the reactor was pressurized with the following monomeric mixtures:

| | Ex. 4 | Ex. 5 | Ex. 6 |
|---|---|---|---|
| vinylidene fluoride | 58.5% by mols | 57 % by mols | 57.5% by mols |
| hexafluoropropene | 36.5% by mols | 38.5% by mols | 39 % by mols |
| tetrafluoroethylene | 5 % by mols | 4.5% by mols | 5.5% by mols |

and except that, during the polymerization, the pressure was maintained constant by feeding the monomers in the following molar ratios:

| | Ex. 4 | Ex. 5 | Ex. 6 |
|---|---|---|---|
| vinylidene fluoride | 76.7% by mols | 77.8% by mols | 78.2% by mols |
| hexafluoropropene | 17.5% by mols | 17.0% by mols | 17.2% by mols |
| tetrafluoroethylene | 5.8% by mols | 5.2% by mols | 4.6% by mols |

In each instance there were obtained 2800 g of terpolymer which, according to ¹⁹F-NMR analysis, exhibited the following weight composition:

| | Ex. 4 | Ex. 5 | Ex. 6 |
|---|---|---|---|
| vinylidene fluoride | 61% by mols | 62 % by mols | 62.5% by mols |
| hexafluoropropene | 32% by mols | 31.5% by mols | 32 % by mols |
| tetrafluoroethylene | 7% by mols | 6.5% by mols | 5.5% by mols |

The terpolymers were subjected to the same determinations and tests as those of examples 1 to 3.

The results are reported in Table 2.

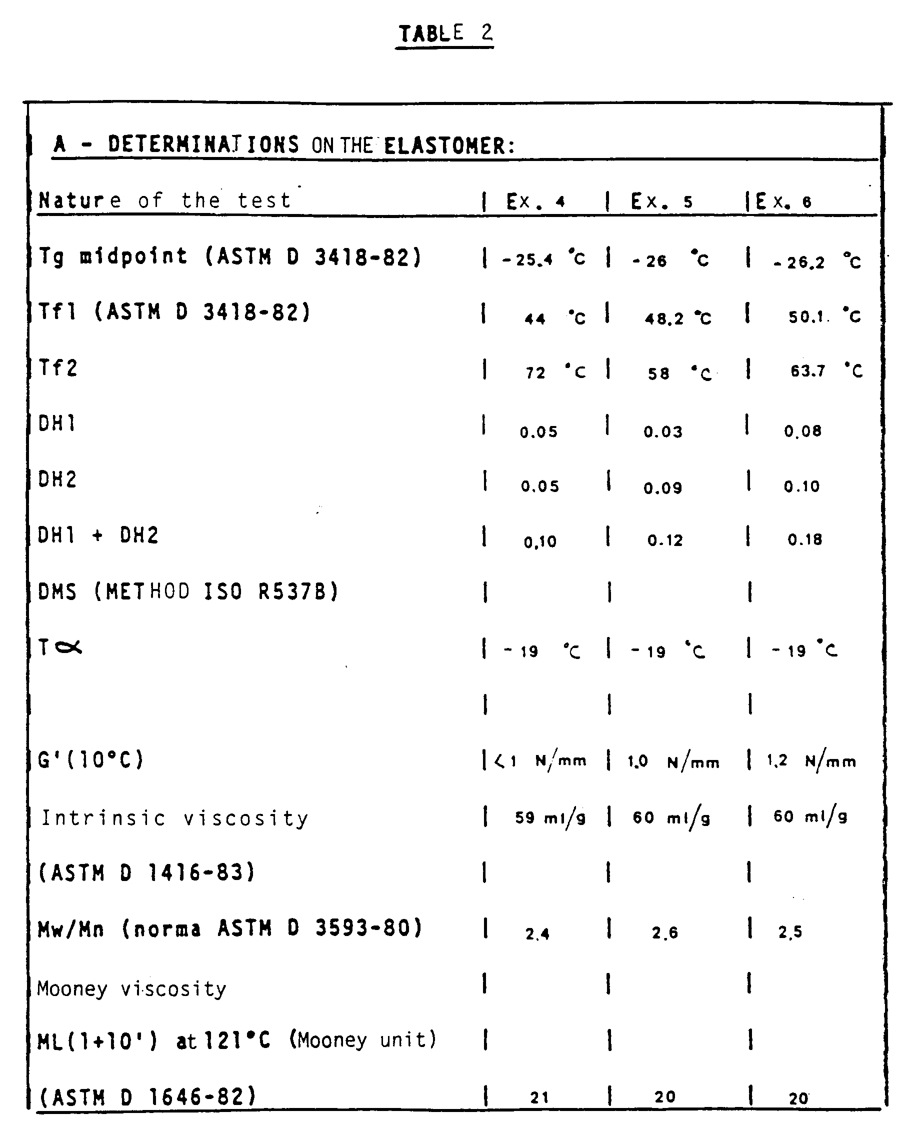

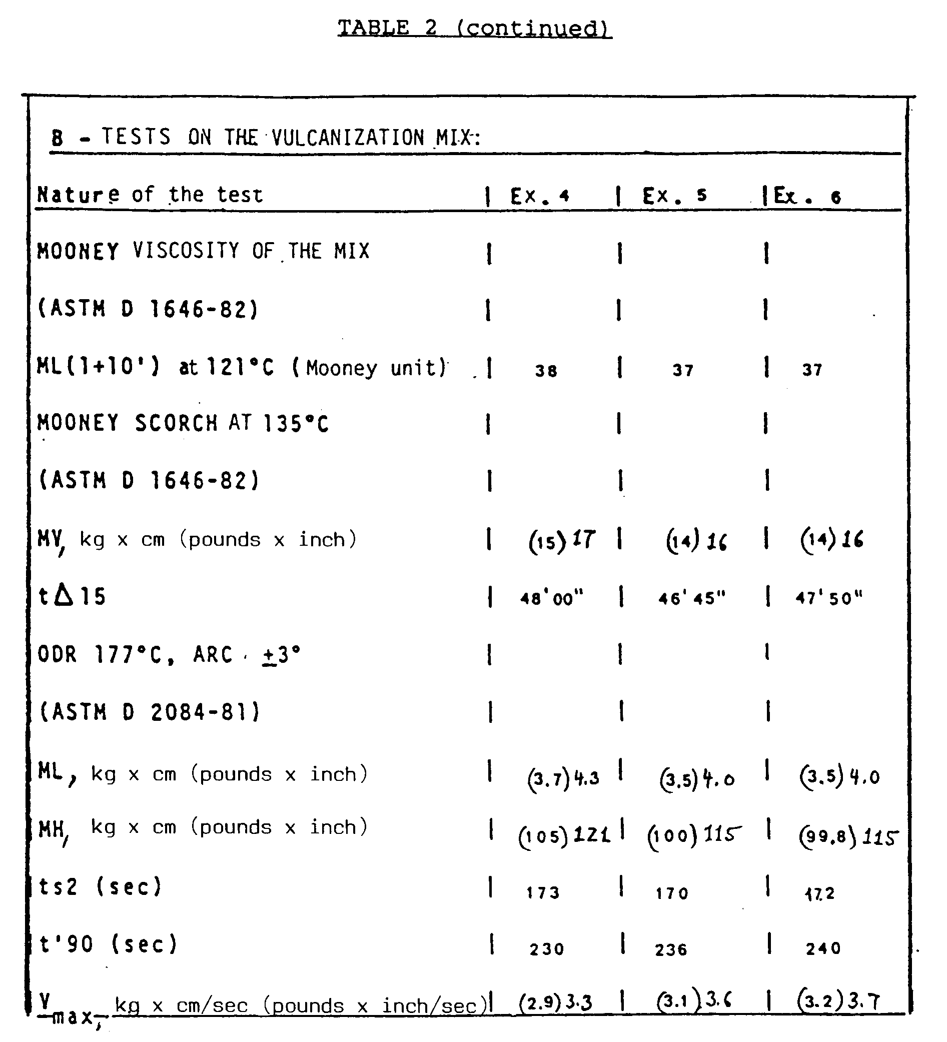

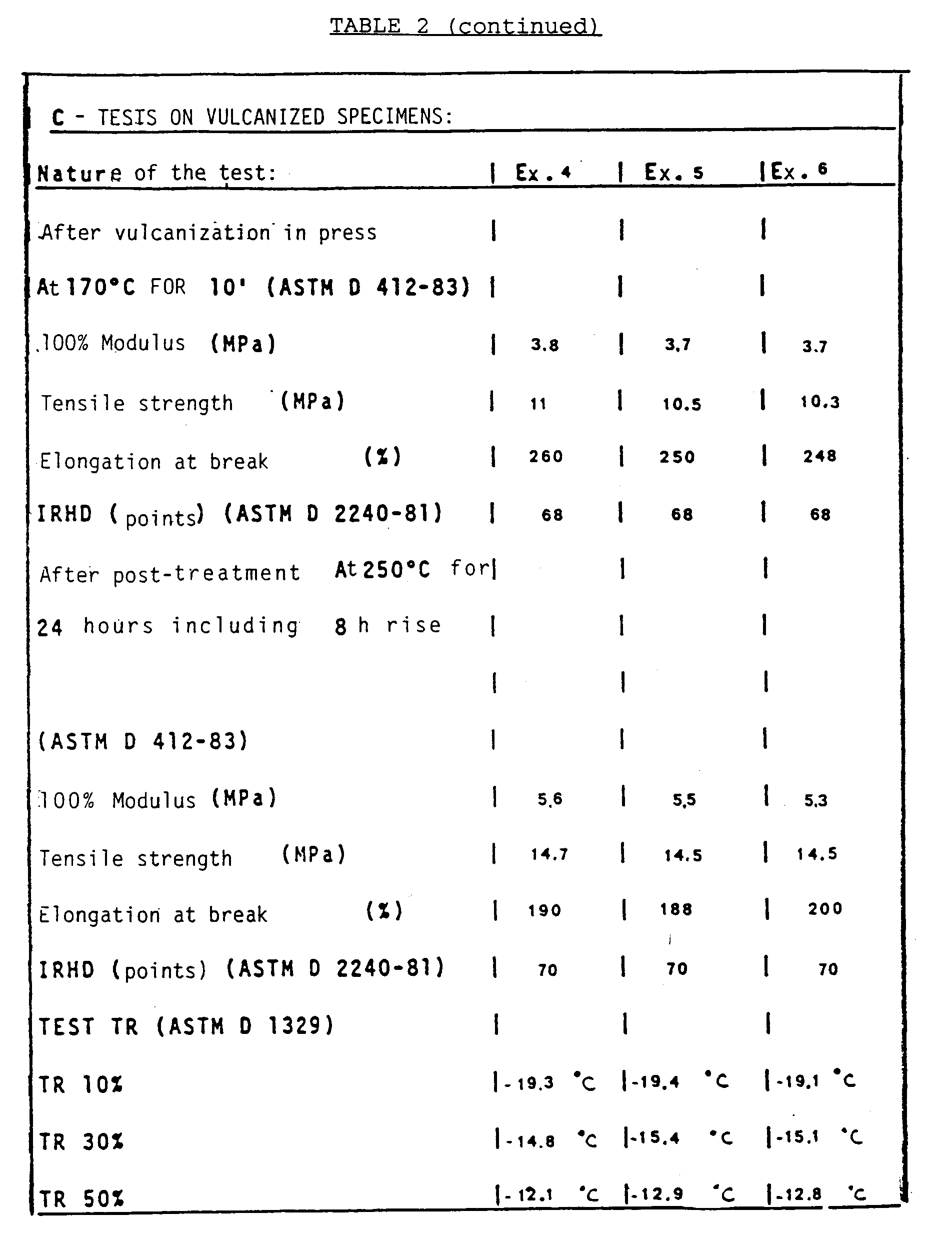

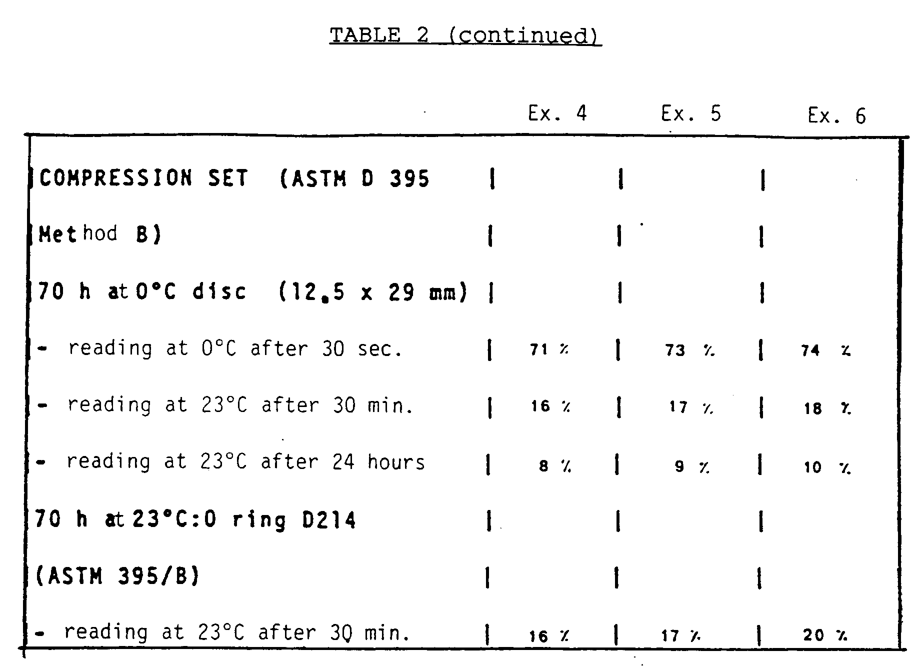

## Claims (Claims for the following Contracting State(s): AT, BE, CH, DE, FR, GB, IT, LI, NL, SE)

1. Fluoroelastomers having a low Tg and a low compression set at low temperature, characterized by the following monomeric composition:
| | |
|---|---|
| vinylidene fluoride: | 60.5 to 64% by weight |
| hexafluoropropene: | 30 to 33% by weight |
| tetrafluoroethylene: | 5 to 8% by weight. |

2. Articles manufactured from a fluoroelastomer according to claim 1.

## Claims (Claims for the following Contracting State(s): ES)

1. Process for the preparation of fluoroelastomers having a low compression set at low temperature, characterized by the polymerization of vinylidene fluoride, hexafluoropropene and tetrafluoroethylene in relative amounts such as to result in a terpolymer having the following monomeric composition:
| | |
|---|---|
| vinylidene fluoride: | 60.5 to 64% by weight |
| hexafluoropropene: | 30 to 33% by weight |
| tetrafluoroethylene: | 5 to 8% by weight |

2. Process according to claim 1 wherein the polymerization is a bulk polymerization, a polymerization in a solution of organic solvents or a polymerization in a water emulsion or suspension.

3. Process according to claim 2 wherein the polymerization is carried out in an aqueous emulsion, at temperatures ranging from 25 to 150°C and under a pressure ranging from 8 to 80 x 10⁵ Pa (8 to 80 atmospheres).

4. Articles manufactured from fluoroelastomers obtainable according to the process of any one of claims 1 to 3.

## Patentansprüche (Patentansprüche für folgende(n) Vertragsstaat(en): AT, BE, CH, DE, FR, GB, IT, LI, NL, SE)

1. Fluorelastomere mit einer niedrigen Tg und einer geringen bleibenden Verformung bei niedriger Temperatur, gekennzeichnet durch die folgende Monomer-Zusammensetzung:
| | |
|---|---|
| Vinylidenfluorid: | 60,5 bis 64 Gewichts-% |
| Hexafluorpropen: | 30 bis 33 Gewichts-% |
| Tetrafluorethylen: | 5 bis 8 Gewichts-%. |

2. Gegenstände, hergestellt aus einem Fluorelastomer nach Anspruch 1.

## Patentansprüche (Patentansprüche für folgende(n) Vertragsstaat(en): ES)

1. Verfahren zur Herstellung von Fluorelastomeren mit einer geringen bleibenden Verformung bei niedriger Temperatur, gekennzeichnet durch die Polymerisation von Vinylidenfluorid, Hexafluorpropen und Tetrafluorethylen in solchen relativen Mengen, die in einem Terpolymer mit der folgenden Monomer-Zusammensetzung resultieren:
| | |
|---|---|
| Vinylidenfluorid: | 60,5 bis 64 Gewichts-% |
| Hexafluorpropen: | 30 bis 33 Gewichts-% |
| Tetrafluorethylen: | 5 bis 8 Gewichts-%. |

2. Verfahren nach Anspruch 1, in welchem die Polymerisation eine Massepolymerisation, eine Polymerisation in einer Lösung von organischen Lösungsmitteln oder eine Polymerisation in einer Wasser-Emulsion oder -Suspension ist.

3. Verfahren nach Anspruch 2, in welchem die Polymerisation in einer wäßrigen Emulsion bei Temperaturen im Bereich von 25 bis 150°C und unter einem Druck im Bereich von 8 bis 80 x 10⁵ Pa (8 bis 80 Atmosphären) durchgeführt wird.

4. Gegenstände, hergestellt aus Fluorelastomeren, die nach dem Verfahren gemäß irgendeinem der Ansprüche 1 bis 3 erhältlich sind.

## Revendications (Revendications pour l'(les) Etat(s) contractant(s) suivant(s): AT, BE, CH, DE, FR, GB, IT, LI, NL, SE)

1. Elastomères fluorés ayant une basse Tg et une faible déformation sous pression à basse température, caractérisés par la composition en monomères suivante :
| | |
|---|---|
| - fluorure de vinylidène | 60,5 à 64 % en poids |
| - hexafluoropropène | 30 à 33 % en poids |
| - tétrafluoroéthylène | 5 à 8 % en poids |

2. Articles manufacturés à partir d'un élastomère fluoré tel que défini à la revendication 1.

## Revendications (Revendications pour l'(les) Etat(s) contractant(s) suivant(s): ES)

1. Procédé de fabrication d'élastomères fluorés ayant une faible déformation sous pression à basse température, caractérisé par la polymérisation de fluorure de vinylidène, d'hexafluoropropène et de tétrafluoroéthylène dans des quantités relatives telles qu'elle conduise à un terpolymère ayant la composition en monomères suivante :
| | |
|---|---|
| - fluorure de vinylidène | 60,5 à 64 % en poids |
| - hexafluoropropène | 30 à 33 % en poids |
| - tétrafluoroéthylène | 5 à 8 % en poids |

2. Procédé selon la revendication 1, dans lequel la polymérisation est une polymérisation en masse, une polymérisation dans une solution de solvants organiques ou une polymérisation dans une émulsion ou suspension aqueuse.

3. Procédé selon la revendication 2, dans lequel la polymérisation est effectuée dans une émulsion aqueuse, à des températures se situant dans la plage de 25 à 150°C et sous une pression se situant dans la plage de 8 à 80 x 10⁵ Pa (8 à 80 atmosphères).

4. Articles manufacturés à partir d'élastomères fluoré pouvant être obtenus par le procédé tel que défini à l'une des revendications 1 à 3.
